Europäisches Patentamt

European Patent Office

Office européen des brevets

(11) Numéro de publication: **0 471 129 B1**

(12) **FASCICULE DE BREVET EUROPEEN**

(45) Date de publication de fascicule du brevet: **28.12.94** (51) Int. Cl.⁵: **A01N 59/00**

(21) Numéro de dépôt: **90402276.1**

(22) Date de dépôt: **09.08.90**

(54) **Solution stable d'hypochlorite de sodium.**

(43) Date de publication de la demande:
**19.02.92 Bulletin 92/08**

(45) Mention de la délivrance du brevet:
**28.12.94 Bulletin 94/52**

(84) Etats contractants désignés:
**AT BE CH DE DK ES FR GB GR IT LI LU NL SE**

(56) Documents cités:
**EP-A- 0 030 401
AU-B- 77 338
FR-A- 2 593 704
GB-A- 2 021 947
US-A- 4 898 681**

(73) Titulaire: **COOPERATION PHARMACEUTIQUE
FRANCAISE, Société Anonyme :
Place Lucien-Auvert
F-77020 Melun (FR)**

(72) Inventeur: **Deroux, Jean
170, avenue Anatole France
F-77190 Dammarie-Les-Lys (FR)**
Inventeur: **Le Rat, Mael
26, Allée du Coudrier
F-91330 Yerres (FR)**
Inventeur: **Compagnon, Jean-Paul
66, rue Nouvelle
F-77190 Dammarie-Les-Lys (FR)**

(74) Mandataire: **Gillard, Marie-Louise et al
Cabinet Beau de Loménie
158, rue de l'Université
F-75340 Paris Cédex 07 (FR)**

**Description**

La présente invention concerne une nouvelle solution d'hypochlorite de sodium, à savoir une solution stable de ce produit qui convient comme agent antiseptique.

Le soluté d'hypochlorite de sodium est utilisé pour ses propriétés bactéricides depuis le début du 19e siècle (en particulier depuis les travaux de LABARRAQUE vers 1820). En 1914, pour l'utilisation dans le lavage des blessures de guerre, DAKIN fut conduit à neutraliser l'excès d'alcalinité du soluté pour en diminuer l'action irritante. Il utilisait pour cette neutralisation l'acide borique à raison d'environ 4 g par litre. Par la suite DAUFRESNE remplaça l'acide borique par le bicarbonate de sodium, mais c'est la formule dite du VAL de GRACE publiée vers 1930 qui fut inscrite à la pharmacopée, sous le nom de soluté dit de DAKIN.

Le soluté neutre dilué d'hypochlorite de sodium (soluté dit de DAKIN) est inscrit à la Pharmacopée Française Xe édition, janvier 1989, sous la formule suivante :

| | |
|---|---|
| carbonate monosodique | 15 g |
| eau de Javel q.s. correspondant à 5 g de chlore actif permanganate de potassium | 0,01 g |
| eau bouillie froide | q.s.p. 1 000 ml. |

L'hypochlorite de sodium se décomposant rapidement pour libérer du chlore, il est précisé dans cet ouvrage que ce soluté doit être conservé au maximum quinze jours dans des récipients bouchés, dans un endroit frais de température inférieure à 15°C et à l'abri de la lumière. La limite inférieure en chlore actif admise pour le soluté est de 4 g de chlore actif par litre.

Un délai de péremption aussi court rend très difficile l'exploitation industrielle de ce produit.

Grâce à la mise au point de conditions bien particulières de fabrication, excluant notamment la présence de particules métalliques, on a pu obtenir une solution ayant une date de péremption correspondant à J + 14, J étant le jour de l'acceptation par les services de contrôle |voir Ann. Pharmaceutiques Françaises 1984, _42_, n° 5, pp. 417-423£.

Dans sa thèse présentée à la Faculté de Pharmacie de Dijon, le 16 février 1987, J.F. LAHET conclut que l'instabilité du soluté dit de DAKIN à température ambiante est réelle et reste une limite à son emploi.

Dans le brevet FR 2 593 704, la demanderesse a décrit un soluté dilué d'hypochlorite de sodium stabilisé à l'aide de phosphate monosodique qui présente la composition ci-après :

| | |
|---|---|
| - hypochlorite de sodium | q.s. pour 5 g de chlore actif |
| - phosphate monosodique | q.s. pour pH 9,6 à 10 |
| - eau purifiée | q.s. pour 1 litre. |

Le phosphate monosodique doit être mis en oeuvre en quantité suffisante pour conférer au soluté d'hypochlorite de sodium un pH compris entre 9,6 et 10, de préférence entre 9,7 et 9,9. Cette gamme de pH permet d'atteindre une stabilité supérieure ou égale à six mois environ.

Cette solution d'hypochlorite peut contenir en outre une substance colorante quelconque inerte vis-à-vis de l'hypochlorite et du phosphate monosodique. Cette substance peut être avantageusement le permanganate de potassium comme dans le soluté de DAKIN.

Toutefois, il s'est avéré nécessaire de poursuivre les recherches pour obtenir une solution d'hypochlorite de sodium ayant une durée de conservation plus longue.

On a trouvé de façon tout à fait surprenante que la solution d'hypochlorite de sodium ayant un titre en chlore actif compris entre 4 et 6 g/l et un pH supérieur à 10, compris entre 10 et 10,5, de préférence d'environ 10,25 pouvait être conservée pendant au moins 24 mois.

Les enseignements de l'art antérieur ne permettaient pas de prévoir qu'une telle composition serait à la fois stable et efficace comme antiseptique.

En effet, il est connu que le chlore est un agent antimicrobien et antiviral très efficace, sa forme active étant l'acide hypochloreux utilisé avantageusement en solution aqueuse si le pH est acide.

Il est connu que le maximum d'activité d'une telle solution est obtenu à pH 5 alors que dans un milieu plus acide il y a formation de chlore volatil qui provoque une perte partielle de l'activité de la solution. A cet effet, on peut se reporter à l'ouvrage de A. CREMIEUX intitulé "LES ANTISEPTIQUES" Base microbiologique de leur utilisation, Edition Sarget, Mérignac, 1982 et à l'ouvrage de A. DAUPHIN intitulé "HYGIENE HOSPITALIERE PRATIQUE", Editions Médicales Internationales, Paris, 1985.

En milieu alcalin, la stabilité de telles solutions est encore assurée mais l'activité antimicrobienne est bien moindre [La revue Prescrire Juillet-Août 1990 ; tome 10 ; n° 98].

Il était donc très difficile, voir même impossible jusqu'à présent, d'avoir un compromis acceptable entre la stabilité d'une part et l'efficacité d'autre part.

La solution d'hypochlorite de sodium de l'invention permet de pallier les inconvénients de l'art antérieur et de disposer donc d'une solution pouvant être réalisée industriellement stable pendant au moins 24 mois et dont l'efficacité thérapeutique est améliorée par rapport au soluté de DAKIN classique ou au soluté selon le brevet FR 2 593 704.

L'invention a donc pour objet une solution d'hypochlorite de sodium qui présente la composition ci-après :

| - hypochlorite de sodium | q.s. pour 4 à 6 g/l de chlore actif |
| - agent de réglage de pH | q.s. pour 10<pH≦10,5 |
| - eau purifiée | q.s. pour 1 l. |

La concentration en hypochlorite de sodium de la solution selon l'invention doit satisfaire aux exigences réglementaires applicables en thérapeutique humaine.

La concentration de 4 g/l d'hypochlorite est le minimum requis pour satisfaire aux exigences de la Pharmacopée Française (Xe édition 1989) et celle de 6 g/l d'hypochlorite correspond à la valeur maximale préconisée par le National Formulary de L'USP 21, janvier 1985, p. 971.

Avantageusement, la concentration en hypochlorite de sodium de la solution selon l'invention sera comprise entre 4 et 5,5, de préférence entre 4,5 et 5,5 et mieux encore entre 5,0 et 5,5.

La zone de pH de la solution selon l'invention est critique pour obtenir un rapport efficacité/innocuité satisfaisant.

L'eau purifiée utilisée dans la solution selon l'invention doit être une eau appropriée pour usage thérapeutique ; on pourra utiliser par exemple l'eau purifiée qui correspond à celle décrite à la Pharmacopée Française, Xe édition, janvier 1989. On utilisera de préférence l'eau osmosée comme eau purifiée.

La solution selon l'invention peut en outre contenir une substance colorante qui est inerte vis-à-vis de l'hypochlorite de sodium et de l'agent de réglage de pH. Cette substance colorante peut être par exemple du permanganate de potassium comme dans le soluté de DAKIN.

L'agent de réglage de pH mis en oeuvre dans le soluté selon l'invention est un agent quelconque inerte vis-à-vis de l'hypochlorite de sodium qui permet d'ajuster le pH du soluté à une valeur comprise entre 10 et 10,5, de préférence voisine de 10,25, sans affecter la fonction ciliaire, c'est-à-dire sans affecter la tolérance vis-à-vis de la cellule vivante in vitro.

Dans le cadre de la présente invention, on considère que la fonction ciliaire n'est pas affectée lorsque les battements des cils subsistent pendant au moins 60 minutes après l'application de la solution sur des cellules ciliées, par exemple des cellules d'épithélium vivant de trachée.

A titre d'exemples d'agent de réglage du pH appropriés aux fins de l'invention, on peut citer notamment le phosphate monopotassique, le phosphate dipotassique, le phosphate monosodique ou leurs mélanges ainsi que les solutions tampons permettant d'obtenir un pH compris entre 10 et 10,5 tout en respectant la fonction ciliaire. On préfère tout particulièrement le phosphate monosodique.

La solution selon l'invention est une solution thérapeutique stable sur une période jusqu'à présent jamais atteinte dans le cadre du soluté de DAKIN, celle-ci étant d'au moins 24 mois à 20-25°C. De plus, cette solution présente des propriétés d'antisepsie et d'innocuité supérieures ou égales aux solutions actuellement connues, comme cela est démontré dans les exemples comparatifs ci-après.

Pour mettre en évidence les avantages procurés par la solution selon l'invention, celle-ci a été comparée à la solution décrite dans le brevet FR 2 593 704.

Ces deux solutions ont été préparées le premier jour de la mise en route des protocoles de recherche et les mesures effectuées ont été les suivantes :
- activité antiseptique ;
- tolérance vis-à-vis de la cellule vivante (fonction ciliaire) ;
- stabilité physico-chimique.

I. ACTIVITE ANTISEPTIQUE

Le test permettant de mesurer cette activité consiste à mettre en contact les solutions testées avec des germes de référence selon le principe des dilutions afin de déterminer la concentration minimale inhibitrice permettant de stopper l'activité microbienne des germes de référence.

Les investigations ont été faites au pH initial des solutions ainsi qu'à deux valeurs de pH comprises dans la gamme de pH des zones malpighiennes d'application (pH 8,5 et 6,2).

Les résultats obtenus aux différents pH figurent dans le tableau I ci-après :

Tableau I

Activité antiseptique

| | à pH initial** | | à pH amené à 8,5* | | à pH amené à 6,2* | |
|---|---|---|---|---|---|---|
| Concentration minimale inhibitrice exprimée en mg de chlore actif | solution de l'invention pH 10,25 | solution du brevet FR 2 593 704 pH 9,8 | solution de l'invention | Solution du brevet FR 2 593 704 | solution de l'invention | solution du brevet FR 2 593 704 |
| Pseudomonas aeruginosa | 0,38 | 0,87 | 0,54 | 0,87 | 0,49 | 0,87 |
| Escherichia coli | 0,54 | 0,87 | 0,54 | 0,97 | 0,49 | 0,87 |
| Staphylococcus | 0,49 | 0,87 | 0,49 | 0,97 | 0,49 | 0,87 |
| Streptococcus faecalis | 0,49 | 0,87 | 0,49 | 0,97 | 0,49 | 0,87 |
| Candida albicans | 0,49 | 0,87 | 0,49 | 0,87 | 0,38 | 0,68 |

\* par adjonction d'acide chlorhydrique

\*\* le pH initial des solutions correspond à la valeur médiane de la gamme préconisée dans la présente demande ou le brevet FR 2 593 704.

4

Ces résultats montrent que :

A - au pH initial :

1) la solution selon l'invention présente une efficacité supérieure à la solution du brevet FR 2 593 704 alors qu'on pouvait s'attendre, compte tenu de l'enseignement de l'art antérieur, à une diminution d'activité [La Revue Prescrire Juillet-Août 1990 ; tome 10 ; n° 98].
2) qu'il devient possible d'utiliser une quantité moins importante de solution pour obtenir un résultat antiseptique comparable, d'où l'intérêt thérapeutique notamment dans la désinfection des loges et cavités ;

B - à différents pH (pH 8,5 et pH 6,2 par exemple) :

La solution selon l'invention, dont le pH maximum est de 10,5, garde un potentiel générateur de chlore naissant toujours supérieur à la solution du brevet FR 2 593 704 (cela est lié à la plus grande stabilité de cette nouvelle solution).

II. TOLERANCE VIS-A-VIS DE LA CELLULE VIVANTE

L'étude comparative a été réalisée sur la fonction ciliaire d'épithélium vivant de trachée.
L'intérêt de vérifier "in vitro" l'intégrité de la fonction ciliaire sous influence des deux solutions permet de prévoir l'innocuité éventuelle des deux produits "in vivo".
Au terme des essais effectués, on a pu constater qu'avec la solution de l'invention l'activité ciliaire est conservée intégralement pendant toute la durée des tests, soit 60 minutes, avec des battements d'amplitude et d'intensité comparables, alors que l'on pouvait s'attendre à une diminution de cette fonction par l'éventuelle agressivité due à l'alcalinité de la solution et de l'augmentation de la teneur en principe actif.

III. STABILITE

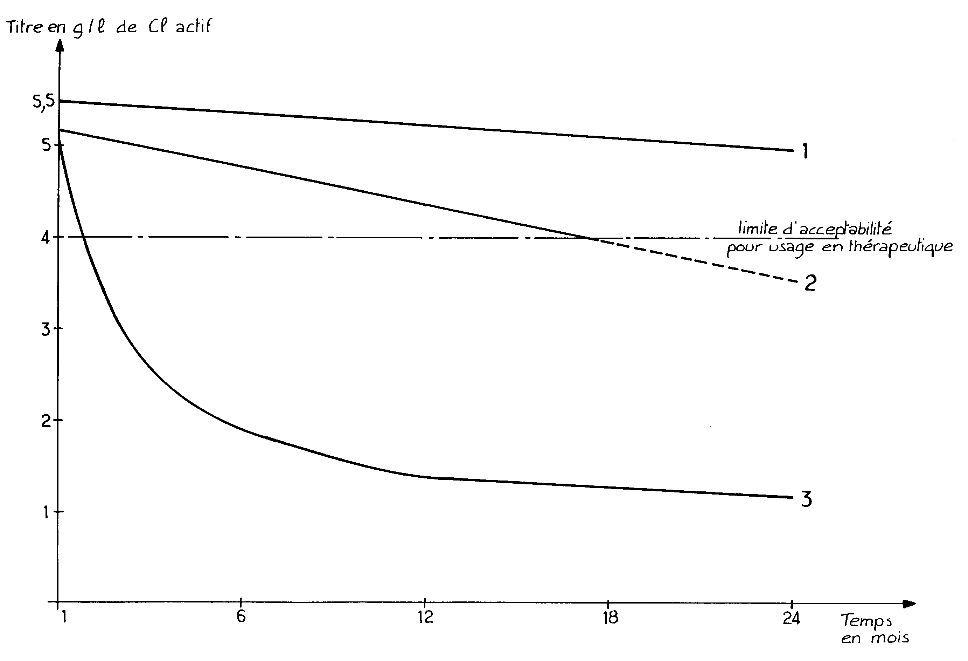

On a mesuré la stabilité dans le temps de la solution de l'invention conservée à 20-25°C et on l'a comparée à celle de la solution selon le brevet FR 2 593 704 et du soluté de DAKIN.
Les résultats obtenus sont reportés sur la figure 1 annexée qui représente les courbes du titre en chlore actif (ordonnées) en fonction du temps exprimé en mois (abscisses).
Les courbes 1 à 3 correspondent respectivement à :
courbe 1 :     solution selon l'invention,
courbe 2 :     solution selon le brevet FR 2 593 704,
courbe 3 :     soluté de DAKIN.
Alors que le titre chlorométrique du soluté de DAKIN chute très rapidement au-dessous de la limite acceptable pour usage thérapeutique (4 g/l), que celui de la solution du brevet FR 2 593 704 franchit cette limite au bout de 18 mois environ, le titre de la solution selon l'invention est nettement au-dessus de cette limite pendant au moins 24 mois.
La solution selon l'invention est donc une solution stable, qui a une efficacité thérapeutique améliorée par rapport aux solutions de l'art antérieur.

**Revendications**
**Revendications pour les Etats contractants suivants : AT, BE, CH, DE, DK, FR, GB, IT, LI, LU, NL, SE**

**1.** Solution stable d'hypochlorite de sodium à usage thérapeutique (antiseptique), caractérisée en ce qu'elle contient :

| | |
|---|---|
| - hypochlorite de sodium | q.s. pour 4 à 6 g/l de chlore actif |
| - agent de réglage de pH | q.s. pour 10<pH≦10,5 |
| - eau purifiée | q.s. pour 1 l. |

**2.** Solution selon la revendication 1, caractérisée en ce qu'elle contient de 4 à 5,5 g/l de chlore actif.

3. Solution selon l'une des revendications 1 à 2, caracté-risée en ce qu'elle contient de 4,5 à 5,5 g/l de chlore actif.

4. Solution selon l'une quelconque des revendications 1 à 3, caractérisée en ce qu'elle contient de 5,0 à 5,5 g/l de chlore actif.

5. Solution selon l'une quelconque des revendications 1 à 4, caractérisée en ce que l'agent de réglage de pH est en quantité suffisante pour un pH de 10,25.

6. Solution selon l'une des revendications 1 à 5, caracté-risée en ce que l'agent de réglage du pH est choisi parmi le phosphate monosodique, le phosphate monopotassique, le phosphate dipotassique, leurs mélanges ou les solutions tampons.

7. Solution selon l'une quelconque des revendications 1 à 6, caractérisée en ce que l'agent de réglage du pH est le phosphate monosodique.

8. Solution selon l'une quelconque des revendications 1 à 7, caractérisée en ce qu'elle contient en outre du permanganate de potassium.

**Revendications pour les Etats contractants suivants : ES, GR**

1. Procédé pour l'obtention d'une solution stable d'hypochlorite de sodium à usage thérapeutique (antiseptique) contenant :

| - hypochlorite de sodium | q.s. pour 4 à 6g/l de chlore actif |
| - agent de réglage de pH | q.s. pour $10 < pH \leq 10,5$ |
| - eau purifiée | q.s. pour 1l, |

caractérisé en ce qu'il consiste à mettre en solution de l'hypochlorite de sodium dans de l'eau jusqu'à l'obtention d'une concentration en chlore actif comprise entre 4 et 6g/l et à ajuster le pH de celle-ci à l'aide d'un agent de réglage de pH permettant d'ajuster le pH de la solution à une valeur comprise entre 10 et 10,5.

2. Procédé selon la revendication 1, caractérisé en ce que la concentration en chlore actif est comprise entre 4 et 5,5g/l.

3. Procédé selon l'une des revendications 1 ou 2, caractérisé en ce que la concentration en chlore actif est comprise entre 4,5 et 5,5g/l.

4. Procédé selon l'une quelconque des revendications 1 à 3, caractérisé en ce que la concentration en chlore actif est comprise entre 5,0 et 5,5g/l.

5. Procédé selon l'une quelconque des revendications 1 à 4, caractérisé en ce que l'agent de pH est utilisé en quantité suffisante pour obtenir un pH de 10,25.

6. Procédé selon l'une quelconque des revendications 1 à 5, caractérisé en ce que l'agent de réglage du pH est choisi parmi le phosphate monosodique, le phosphate monopotassique, le phosphate dipotassique, leurs mélanges ou les solutions tampons.

7. Procédé selon l'une quelconque des revendications 1 à 6, caractérisé en ce que l'agent de réglage du pH est le phosphate monosodique.

8. Procédé selon l'une quelconque des revendications 1 à 7, caractérisé en ce que l'on ajoute en outre du permanganate de potassium.

**Claims**
**Claims for the following Contracting States : AT, BE, CH, DE, DK, FR, GB, IT, LI, LU, NL, SE**

1.  Stable solution of sodium hypochlorite for therapeutic (antiseptic) use, characterized in that it contains:

| - sodium hypochlorite | q.s. for 4 to 6 g/l of active chlorine |
| - pH regulator | q.s. for 10<pH≤10.5 |
| - purified water | q.s. for 1 l |

2.  Solution according to claim 1, characterized in that it contains between 4 and 5.5 g/l of active chlorine.

3.  Solution according to one of claims 1 or 2, characterized in that it contains from 4.5 to 5.5 g/l of active chlorine.

4.  Solution according to any one of claims 1 to 3, characterized in that it contains from 5.0 to 5.5 g/l of active chlorine.

5.  Solution according to any one of claims 1 to 4, characterized in that the pH regulator is in a sufficient amount for a pH of 10.25.

6.  Solution according to any one of claims 1 to 5, characterized in that the pH regulator is selected from monosodium phosphate, monopotassium phosphate, dipotassium phosphate, mixtures thereof or buffer solutions.

7.  Solution according to any one of claims 1 to 6, characterized in that the pH regulator is monosodium phosphate.

8.  Solution according to any one of claims 1 to 7, characterized in that it further contains potassium permanganate.

**Claims for the following Contracting States : ES, GR**

1.  Process for the obtention of a stable solution of sodium hypochlorite for therapeutic (antiseptic) use containing:

| - sodium hypochlorite | q.s. for 4 to 6 g/l of active chlorine |
| - pH regulator | q.s. for 10<pH≤10.5 |
| - purified water | q.s. for 1 1 |

characterized in that it consists in solving a solution of sodium hypochlorite in water up to the obtention of a concentration of active chlorine comprised between 4 and 6 g/l and in adjusting the pH thereof by means of a pH regulator allowing to adjust the pH of the solution to a value comprised between 10 and 10.5.

2.  Process according to claim 1, characterized in that the concentration of the active chlorine is between 4 and 5.5 g/l.

3.  Process according to one of claims 1 or 2, characterized in that the concentration of the active chlorine is from 4.5 to 5.5 g/l.

4.  Process according to any one of claims 1 to 3, characterized in that the concentration of the active chlorine is from 5.0 to 5.5 g/l.

5.  Process according to any one of claims 1 to 4, characterized in that the pH regulator is used in a sufficient amount for obtaining a pH of 10.25.

6. Process according to any one of claims 1 to 5, characterized in that the pH regulator is selected from monosodium phosphate, monopotassium phosphate, dipotassium phosphate, mixtures thereof or buffer solutions.

7. Process according to any one of claims 1 to 6, characterized in that the pH regulator is monosodium phosphate.

8. Process according to any one of claims 1 to 7, characterized in that it further contains potassium permanganate.

**Patentansprüche**
**Patentansprüche für folgende Vertragsstaaten : AT, BE, CH, DE, DK, FR, GB, IT, LI, LU, NL**

1. Stabile Natriumhypochloritlösung zur therapeutischen (antiseptischen) Verwendung, dadurch gekennzeichnet, daß sie enthält:

| | |
|---|---|
| - Natriumhypochlorit | q.s. auf 4 bis 6 g/l aktives Chlor |
| - pH-Regulierungsmittel | q.s. auf $10 < pH \leq 10,5$ |
| - reines Wasser | q.s. auf 1 l. |

2. Lösung nach Anspruch 1, dadurch gekennzeichnet, daß sie 4 bis 5,5 g/l aktives Chlor enthält.

3. Lösung nach einem der Ansprüche 1 bis 2, dadurch gekennzeichnet, daß sie 4,5 bis 5,5 g/l aktives Chlor enthält.

4. Lösung nach einem der Ansprüche 1 bis 3, dadurch gekennzeichnet, daß sie 5,0 bis 5,5 g/l aktives Chlor enthält.

5. Lösung nach einem der Ansprüche 1 bis 4, dadurch gekennzeichnet, daß das pH-Regulierungsmittel in einer für pH 10,25 ausreichenden Menge vorliegt.

6. Lösung nach einem der Ansprüche 1 bis 5, dadurch gekennzeichnet, daß das pH-Regulierungsmittel ausgewählt ist aus Mononatriumphosphat, Monokaliumphosphat, Dikaliumphosphat, Mischungen davon oder Pufferlösungen.

7. Lösung nach einem der Ansprüche 1 bis 6, dadurch gekennzeichnet, daß das pH-Regulierungsmittel Mononatriumphosphat ist.

8. Lösung nach einem der Ansprüche 1 bis 7, dadurch gekennzeichnet, daß sie weiters Kaliumpermanganat enthält.

**Patentansprüche für folgende Vertragsstaaten : ES, GR**

1. Verfahren zur Herstellung einer stabilen Natriumhypochloritlösung zur therapeutischen (antiseptischen) Verwendung, enthaltend:

| | |
|---|---|
| - Natriumhypochlorit | q.s. auf 4 bis 6 g/l aktives Chlor |
| - pH-Regulierungsmittel | q.s. auf $10 < pH \leq 10,5$ |
| - reines Wasser | q.s. auf 1 l, |

dadurch gekennzeichnet, daß es darin besteht, daß Natriumhypochlorit bis zur Erzielung einer Konzentration an aktivem Chlor zwischen 4 und 6 g/l in Wasser in Lösung gebracht wird und der pH-Wert derselben mit Hilfe eines pH-Regulierungsmittels zur Einstellung des pH-Werts der Lösung auf zwischen 10 und 10,5 eingestellt wird.

2. Verfahren nach Anspruch 1, dadurch gekennzeichnet, daß die Konzentration an aktivem Chlor zwischen 4 und 5,5 g/l beträgt.

3. Verfahren nach einem der Ansprüche 1 oder 2, dadurch gekennzeichnet, daß die Konzentration an aktivem Chlor zwischen 4,5 und 5,5 g/l beträgt.

4. Verfahren nach einem der Ansprüche 1 bis 3, dadurch gekennzeichnet, daß die Konzentration an aktivem Chlor zwischen 5,0 und 5,5 g/l beträgt.

5. Verfahren nach einem der Ansprüche 1 bis 4, dadurch gekennzeichnet, daß das pH-Regulierungsmittel in einer für pH 10,25 ausreichenden Menge verwendet wird.

6. Verfahren nach einem der Ansprüche 1 bis 5, dadurch gekennzeichnet, daß das pH-Regulierungsmittel ausgewählt ist aus Mononatriumphosphat, Monokaliumphosphat, Dikaliumphosphat, Mischungen davon oder Pufferlösungen.

7. Verfahren nach einem der Ansprüche 1 bis 6, dadurch gekennzeichnet, daß das pH-Regulierungsmittel Mononatriumphosphat ist.

8. Verfahren nach einem der Ansprüche 1 bis 7, dadurch gekennzeichnet, daß weiters Kaliumpermanganat zugegeben wird.

Titre en g/ℓ de Cℓ actif

limite d'acceptabilité
pour usage en thérapeutique

1

2

3

Temps
en mois

EP 0 471 129 B1